# EUROPEAN PATENT SPECIFICATION

(11) **EP 1 319 563 B1**
(45) Date of publication and mention of the grant of the patent: **13.07.2005**
(21) Application number: 02258621.8
(22) Date of filing: 13.12.2002
(51) Int. Cl.: B60R 25/00, B60R 25/04, B60R 11/02, B60R 25/10

(54) **Antitheft apparatus, antitheft method and program therefor**
Vorrichtung, Verfahren und Programm zur Diebstahlsicherung
Dispositif, méthode et programme antivol

(30) Priority: 14.12.2001 JP 2001381679
(43) Date of publication of application: 18.06.2003
(73) Proprietor: Pioneer Corporation, Meguro-ku, Tokyo (JP)
(72) Inventor: Nonaka, Yoshiya, c/o Pioneer Corporation, Kawagoe-shi, Saitama (JP)
(74) Representative: Haley, Stephen

(56) References cited:
- EP-A- 0 736 425
- DE-A- 4 008 536
- DE-A- 19 803 178
- DE-U- 9 218 969
- US-A- 5 506 563
- US-A- 5 880 673
- US-A- 6 028 507
- US-B1- 6 184 779

## Description

The present disclosure relates to the subject matter contained in Japanese Patent Application No.2001-381679 filed on December 14, 2001.

### 1. Field of the Invention

The present invention relates to antitheft apparatus, an antitheft system, an antitheft method and a program therefor, by which a movable body or the like can be prevented from being stolen.

### 2. Description of the Related Art

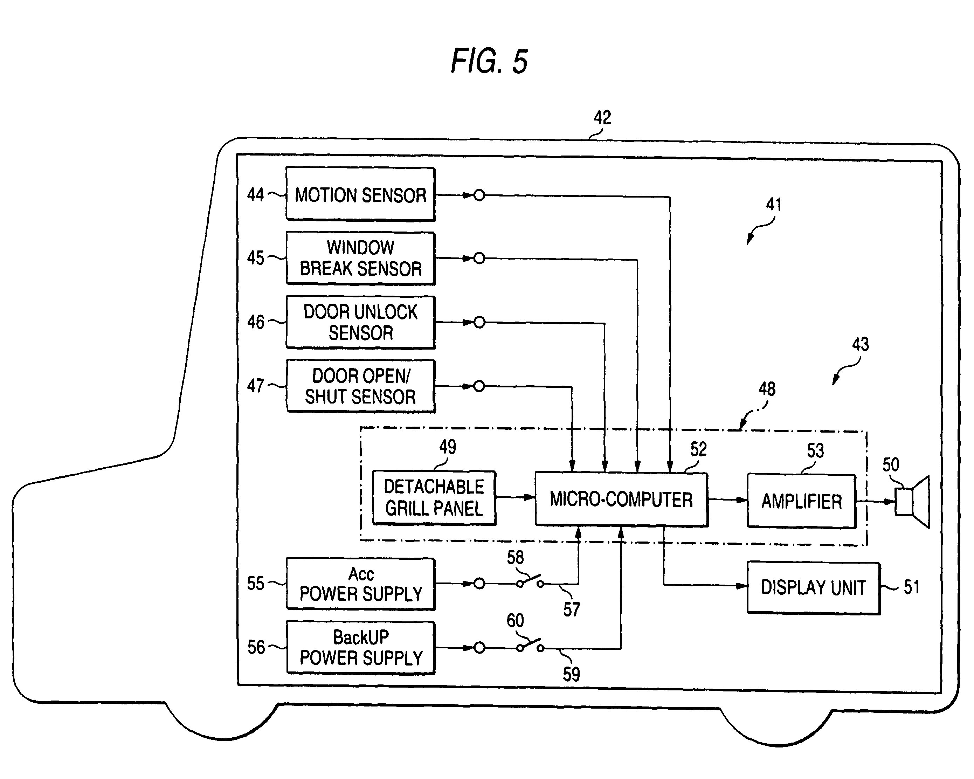

A configuration, for example, as shown in a block diagram of Fig. 5 has been heretofore known as antitheft apparatus of this type. The antitheft apparatus 41 shown in Fig. 5 is attached to a movable body, for example, a vehicle 42 such as an automobile. The antitheft apparatus 41 has an electronic device 43 such as an audio apparatus or a navigation system apparatus, a motion sensor 44, window break sensors 45, door unlock sensors 46, and door open/shut sensors 47. The electronic device 43 includes a device body 48, a detachable grill panel 49 as an operation unit which can be attached to and detached from the device body 48, a speaker 50, and a display unit 51 such as a liquid-crystal display unit.

The device body 48 has a micro-computer 52, an amplifier 53, and a playback unit not shown but for reading an information signal stored in a recording medium such as a CD (Compact Disk), applying predetermined signal processing to the information signal and supplying the processed information signal to the amplifier 53 or the display unit. The micro-computer 52 is provided to control the operations of the amplifier 53, the display unit, the playback unit, etc. The amplifier 53 amplifies an audio signal supplied from the playback unit and subjected to the signal processing, and supplies the amplified audio signal to the speaker 50. Further, the amplifier 53 generates sound data such as alarm sound on the basis of control of the micro-computer 52 and supplies the sound data to the speaker 50.

The device body 48 is made operative by electric power supplied from an accessory (Acc) power supply 55 and a backup (BackUP) power supply 56 both mounted in the vehicle 42. Incidentally, an accessory switch (Acc switch) 58 is provided in a power supply line 57 which connects the Acc power supply 55 and the device body 48 to each other. A backup switch 60 is provided in a power supply line 59 which connects the backup power supply 56 and the device body 48 to each other.

When a passenger of the vehicle 42 turns on the Acc switch 58, the backup switch 60 is turned off in synchronism with the turning-on of the Acc switch 58 so that the device body 48 is supplied with electric power from the Acc power supply 55. On the other hand, when a passenger of the vehicle 42 turns off the Acc switch 58, the backup switch 60 is turned on in synchronism with the turning-off of the Acc switch 58 so that the device body 48 is supplied with electric power from the backup power supply 56. Incidentally, when the vehicle 42 is at a standstill, electric power from the backup power supply 56 is supplied only to the micro-computer 52 of the device body 48.

The speaker 50 outputs the audio signal or sound data supplied from the amplifier 53 as sound. The display unit displays the information supplied from the playback unit on the basis of control of the micro-computer 52 as an image on a display panel such as a liquid-crystal display panel. When, for example, the electronic device 43 is a navigation system apparatus, map information or the like supplied from the playback unit is displayed on the display panel.

The detachable grill panel 49 has various kinds of operation switches. The detachable grill panel 49 can be attached to and detached from the device body 48 by an attachment/detachment mechanism not shown but provided in the device body 48. Further, a connection terminal not shown is provided in the detachable grill panel 49 so that the detachable grill panel 49 can be electrically connected to the device body 48 through the connection terminal. That is, when the detachable grill panel 49 is attached to the device body 48, the connection terminal is connected to a connection terminal of the device body 48 to thereby electrically connect the detachable grill panel 49 to the device body 48.

Electric power from the device body 48 is supplied to the detachable grill panel 49 through the connection terminal to thereby make the detachable grill panel 49 operative. When a passenger of the vehicle 42 operates an operation switch in the operative state of the detachable grill panel 49, an operation signal corresponding to the operation is supplied to the device body 48 through the connection terminal. In this manner, various kinds of operations for the playback unit or the like can be carried out.

Further, a detachment sensor not shown is provided in the connection terminal so that attachment/detachment of the detachable grill panel 49 to/from the device body 48 can be detected by the detachment sensor. The micro-computer 52 recognizes attachment/detachment of the detachable grill panel 49 to/from the device body 48 by acquiring detection by the detachment sensor. Incidentally, the detachable grill panel 49 is detached from the device body 48 when the passenger of the vehicle 42 gets out of the vehicle 42. Because the electronic device 43 is disabled from being used, the electronic device 43 is prevented from being stolen.

The motion sensor 44 detects suspicious (abnormal) motion of the vehicle 42. For example, the motion sensor 44 is provided in a suspension of the vehicle 42. Generally, the motion sensor 44 manages, as data, the level of vibration, etc. suffered by the vehicle 42 at a standstill with the passenger's operation of getting on/off the vehicle 42. When the motion sensor 44 detects that the vehicle 42 suffers vibration exceeding the level, such as vibration generated in the case where the front or rear portion of the vehicle is lifted up, the motion sensor 44 makes a decision that this motion is suspicious (abnormal) motion and outputs a detection signal to the micro-computer 52 of the electronic device 43.

The window break sensors 45 detect that a door window pane, a front glass pane, a rear glass pane, and so on, not shown but provided in the vehicle 42 are broken. For example, the window break sensors 45 are embedded in the door window pane, the front glass pane, the rear glass pane, and so on, respectively. When the window break sensors 45 detect that those panes suffer excessive external impact, the window break sensors 45 make decisions that those panes are broken and output detection signals to the micro-computer 52 of the electronic device 43.

The door unlock sensors 46 detect that doors not shown but provided in the vehicle 42 are unlocked. For example, the door unlock sensors 46 are provided in door locking mechanisms not shown but disposed in doors of the vehicle 42, so that the door unlock sensors 46 detect unlocking of the doors on the basis of the operations of the door locking mechanisms. Then, the door unlock sensors 46 output detection signals to the micro-computer 52 of the electronic device 43.

The door open/shut sensors 47 detect that doors of the vehicle 42 are opened/shut. For example, the door open/shut sensors 47 are provided in door opening/shutting mechanisms not shown but for opening/shutting the doors, so that the door open/shut sensors 47 detect the opening/shutting states of the doors on the basis of the operations of the door opening/shutting mechanisms. Then, the door open/shut sensors 47 output detection signals to the micro-computer 52 of the electronic device 43.

In the antitheft apparatus 41, when the micro-computer 52 of the electronic device 43 receives a detection signal from any one of the motion sensor 44 and the window break sensors 45, the micro-computer 52 makes a decision that an abnormality occurs in the vehicle 42 and controls the amplifier 53. The amplifier 53 generates audio data such as alarm sound on the basis of control of the micro-computer 52 and supplies the audio data to the speaker 50. The speaker 50 outputs the audio data supplied from the amplifier 53 as sound.

Further, in the antitheft apparatus 41, when the micro-computer 52 of the electronic device 43 receives a detection signal from any one of the door unlock sensors 46 and the door open/shut sensors 47, and recognizes that the detachable grill panel 49 is not attached to the device body 48, that is, detection of attachment to the device body 48 by the detachment sensor is not obtained even after a predetermined time has passed since turning-on of the Acc switch 58, the micro-computer 52 controls the amplifier 53 to output sound such as alarm sound from the speaker 50.

In this manner, the related-art antitheft apparatus 41 outputs sound such as alarm sound on the basis of the decision that an invader other than the legitimate owner of the vehicle 42 has gotten on the vehicle 42. Hence, the vehicle 42 which is a movable body or the electronic device 43 mounted in the vehicle 42 is prevented from being stolen.

The vehicle 42 which is a movable body varies widely in accordance with the user' taste and the form of use. Further, the door opening/shutting mechanisms and the door locking mechanisms vary in accordance with the kind of the vehicle 42. Hence, signals transmitted from the door unlock sensors 46 and the door open/shut sensors 47 mounted in the mechanisms respectively are designed to vary in accordance with the kind of the vehicle 42 in advance. For this reason, it is very difficult to design and develop the related-art antitheft apparatus 41 because a function for analyzing such signals varying in accordance with the kind of the vehicle 42 must be provided for versatile purposes in accordance with those signals.

As described above, the related-art antitheft apparatus 41 must be provided as versatile antitheft apparatus in accordance with different signals transmitted from door unlock sensors 46 and door open/shut sensors 47 in various kinds of vehicles 42. Hence, there is a problem that it is very difficult to design and develop the antitheft apparatus 41 of this type. In addition, there is concern that attachment of the antitheft apparatus 41 to the vehicle 42 may have to be given up in accordance with the kind of the vehicle 42.

DE-U-9218969 discloses an anti-theft apparatus according to the preamble of claim 1 and the other independent claims with storage for an owner's specific authentication code and a transmission unit capable of storing the authentication code.

The invention is designed to solve the problem and an object of the invention is to provide antitheft apparatus, an antitheft system, an antitheft method and a program therefor, in which versatility can be achieved by a simple configuration.

According to a first aspect of the invention, there is provided an antitheft apparatus comprising:
an antitheft apparatus comprising:
   a device attached to a movable body, operated by electric power supplied from the movable body, and storing an owner's specific authentication code;
   an authentication code storage and transmission unit capable of storing an authentication code equivalent to the owner's specific authentication code and capable of transmitting a signal of the authentication code to the device;
   an authentication code reception unit capable of receiving the signal of the authentication code transmitted from the authentication code storage and transmission unit when the device is operative; and
   a control unit for making a decision that a legitimate owner of the movable body is using the movable body when the authentication code received by the authentication code reception unit coincides with the owner's specific authentication code stored in the device;
   the apparatus further comprising an abnormality occurrence output unit for outputting information indicating occurrence of an abnormality,
wherein the control unit controls the abnormality occurrence output unit to output the information when the control unit makes either a decision that the signal of the authentication code transmitted from the authentication code storage and transmission unit is not received by the authentication code reception unit in a condition that the device is operative or a decision that the authentication code recevied by the authentication code reception unit does not coincide with the owner's specific authentication code stored in the device, and characterised in that:
the abnormality occurrence output unit outputs the information indicating occurrence of an abnormality by transmitting the information to an external portion through a wireless transmission medium;
the device has a function for acquiring location information indicating a current location of the movable body; and
the abnormality occurrence output unit transmits the location information in addition to the information indicating occurrence of an abnormality.

According to a second aspect of the invention, in the antitheft apparatus according to the first aspect, the device includes a device body operated by electric power supplied from the movable body and an operation unit which can be attached to the device body and detached from the device body. The control unit makes a decision that the legitimate owner of the movable body is using the movable body when the authentication code received by the authentication code reception unit coincides with the owner's specific authentication code stored in the device and the operation unit is attached to the device body.

According to a third aspect of the invention, the antitheft apparatus according to the second aspect further includes an abnormality occurrence output unit for outputting information indicating occurrence of an abnormality. The control unit controls the abnormality occurrence output unit to output the information when the control unit makes a decision that the signal of the authentication code transmitted from the authentication code storage and transmission unit is not received by the authentication code reception unit in a condition that the device body is operative, a decision that the authentication code received by the authentication code reception unit does not coincide with the owner's specific authentication code stored in the device body, or a decision that the operation unit is not attached to the device body.

According to a fourth aspect of the invention, in the antitheft apparatus according to the third aspect, the abnormality occurrence output unit outputs the information indicating occurrence of an abnormality as sound.

According to the fifth aspect of the invention there is provided an antitheft method comprising the steps of:
detecting that a device attached to a movable body is operated by electric power supplied from the movable body;
enabling reception of an authentication code transmitted from an external portion in a condition that the device is operative; and
performing controlling to output information indicating occurrence of an abnormality when the authentication code transmitted from the external portion is not received in the condition that the device is operative or when the received authentication code does not coincide with the owner's specific authentication code stored in the device, and characterised by:
   outputting the information indicating occurrence of an abnormality by transmitting the information to an external portion through a wireless transmission medium;
   acquiring location information indicating a current location of the moveable body; and
   transmitting the location information in addition to the information indicating occurrence of an abnormality.

According to a sixth aspect of the invention, there is provided an antitheft program comprising instructions for comprising computer to perform an antitheft method comprising the steps of:
detecting that a device attached to a movable body is operated by electric power supplied from the movable body;
enabling reception of an authentication code transmitted from an external portion in a condition that the device is operative; and
performing controlling to output information indicating occurrence of an abnormality when the authentication code transmitted from the external portion is not received in the condition that the device is operative or when the received authentication code does not coincide with an owner's specific authentication code stored in the device, and characterised by:
   outputting the information indicating occurrence of an abnormality by transmitting the information to an external portion through a wireless transmission medium;
   acquiring location information indicating a current location of the moveable body; and
   transmitting the location information in addition to the information indicating occurrence of an abnormality

In the accompanying drawings:-
Fig. 1 is a schematic configuration view showing the overall configuration of an antitheft system according to an embodiment of the invention.
Fig. 2 is a typical view showing the structure of a database for accumulating acquired vehicle location information in the embodiment.
Fig. 3 is a view showing a screen image based on the location information in the embodiment.
Fig. 4 is a flow chart for explaining operation in the embodiment.
Fig. 5 is a block diagram showing a antitheft apparatus according to a related art.

An embodiment of the invention will be described below with reference to the drawings.

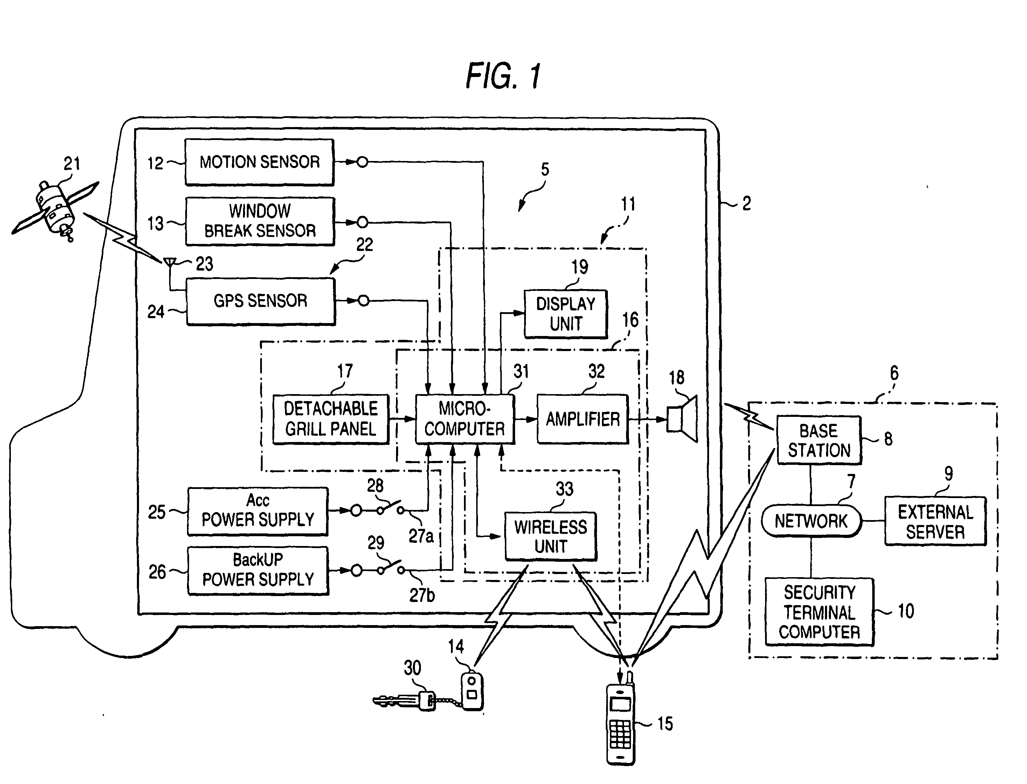

Fig. 1 is a typical view showing the schematic configuration of an antitheft system according to this embodiment. In Fig. 1, the antitheft system 1 is a system which is achieved by a computer network technique such as Internet or Intranet and which is provided for preventing a movable body such as a vehicle 2 or goods in the vehicle 2 from being stolen. The antitheft system 1 has antitheft apparatus 5 mounted in the vehicle 2, and a security network 6.

The security network 6 includes a base station 8 connected through a network 7 constituted by a communication circuit network such as Intranet or Internet, an external server 9 installed in a surveillance center, and a security terminal computer 10 installed in a security center. The base station 8 transmits information indicating occurrence of an abnormality and obtained from the antitheft apparatus 5 (which will be described later), to the external server 9 through the network 7. The external server 9 notifies the security terminal computer 10 of the security center, of the abnormality through the network 7. Incidentally, the security center may belong to a public organ such as the police or may belong to a private organ such as a security company, that is, the security center may belong to any organ coping with abnormalities.

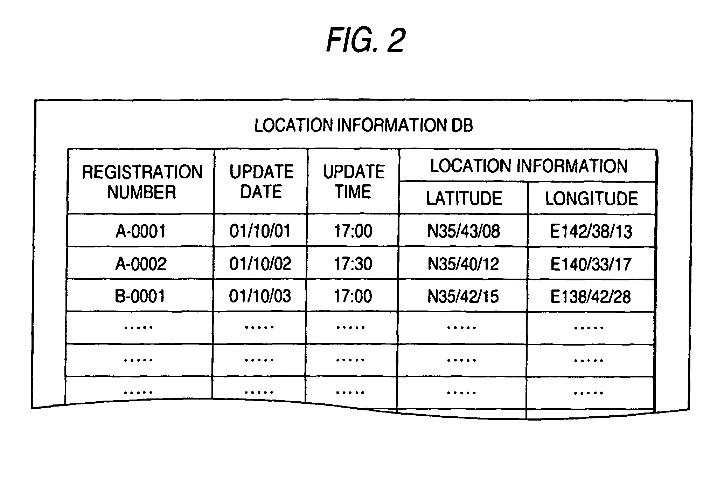

The external server 9 has a processing unit not shown, a notifying unit, and a location information database which is shown in Fig. 2 and will be described later. The notifying unit outputs a signal for notifying the security terminal computer 10 of the abnormality by wire or by wireless. Upon reception of information indicating occurrence of an abnormality from the base station 8, the processing unit controls the notifying unit to output the signal for notification of the abnormality.

In the location information database, location information which is transmitted from the antitheft apparatus 5 through the base station 8 and which indicates the current location of the vehicle 2 is accumulated. As shown in Fig. 2, the location information database is formed to have a structure in which latitude-longitude information indicating the current location of the vehicle 2 is recorded as one record corresponding to the specific registration number of the vehicle 2 obtained from the vehicle 2. Each record is updated whenever current location information is acquired from the vehicle 2. As shown in Fig. 2, each record has a field for recording the registration number of the vehicle 2, a field for recording the update date, a field for recording the update time, and a field for recording the latitude-longitude information as location information. When information indicating occurrence of an abnormality is transmitted from the base station 8, location information transmitted together with this information is updated in real time. Then, the location information added to the signal for notification of the abnormality is transmitted to the security terminal computer 10 of the security center on the basis of control of the processing unit.

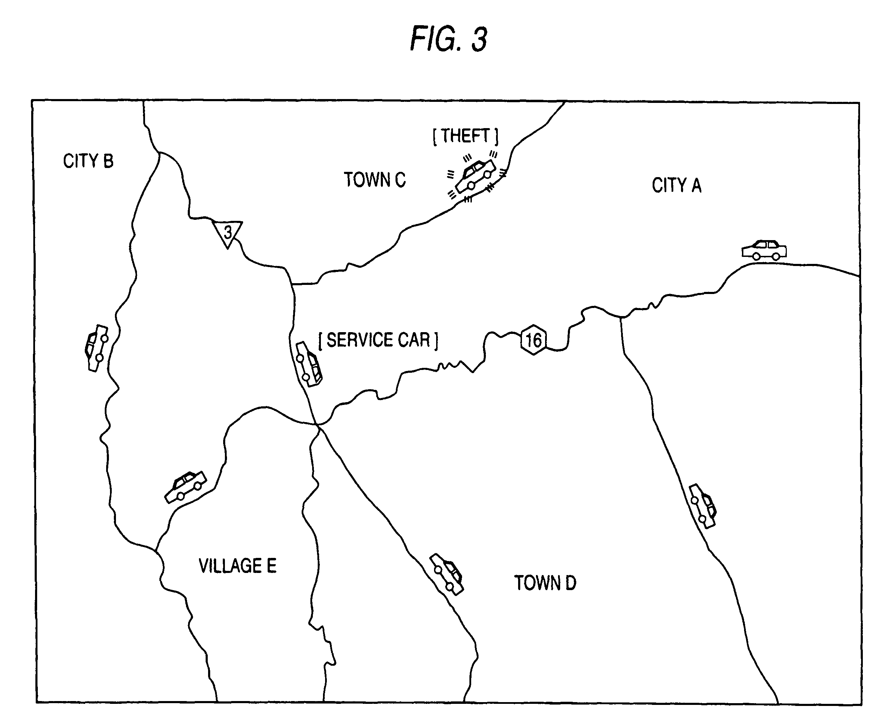

A display unit not shown but for displaying map information as shown in Fig. 3 is provided in the security terminal computer 10 of the security center. The current location of the vehicle 2 is displayed while superposed on the map information on the basis of the location information transmitted from the external server 9. Hence, the current location of the vehicle 2 which may be stolen can be grasped in real time, so that measures against theft can be taken quickly.

As shown in Fig. 1, the antitheft apparatus 5 includes an electronic device 11, a motion sensor 12, window break sensors 13, an authentication transceiver 14 as an authentication code storage and transmission unit, and a mobile communication terminal 15 such as a cellular phone.

The electronic device 11 has a device body 16, a detachable grill panel 17 as an operation unit detachably attached to the device body 16, a speaker 18, and a display unit 19 such as a liquid-crystal display or an organic EL display.

For example, the device body 16 is disposed on a dash-board located between a driver's seat not shown and an assistant driver's seat not shown in the vehicle 2. A GPS (Global Positioning System) receiver 22 for receiving electric wave from an artificial satellite 21 is connected to the device body 16. The GPS receiver 22 has a GPS antenna 23, and a GPS sensor 24. Electric wave from the artificial satellite 21 is received through the GPS antenna 23. The GPS receiver 22 measures the current location of the vehicle 2 on the basis of the state of the received electric wave received by the GPS sensor 24.

Further, the device body 16 is supplied with electric power from an accessory (Acc) power supply 25 or a backup (BackUP) power supply 26 mounted in the vehicle 2. Incidentally, an accessory switch (Acc switch) 28 is provided in a power supply line 27a which connects the Acc power supply 25 and the device body 16. A backup switch 29 is provided in a power supply line 27b which connects the backup power supply 26 and the device body 16.

When a vehicle key 30 which will be described later is operated to turn on the Acc switch 28, the device body 16 is made operative and the backup switch 29 is turned off. When the vehicle key 30 is further continuously operated, an engine not shown but provided in the vehicle 2 starts. On the other hand, when the vehicle key 30 is operated to stop the engine and turn off the Acc switch 28, the backup switch 29 is turned on. As a result, electric power from the backup power supply 26 is supplied to the device body 16, so that amplifier 32, speaker 18 , micro-computer 31 and so on which will be described later is made operative.

The device body 16 has a micro-computer 31 as a control unit, an amplifier 32, a wireless unit 33 as an authentication code receiving unit, and a playback unit for playing back a CD (Compact Disk) having music information, etc. recorded therein and a CD-ROM (Read Only Memory) having map information, etc. recorded therein. The device body 16 is made operative by electric power supplied from the Acc power supply 25. Incidentally, the GPS receiver 22 and the playback unit for playing back a CD-ROM, etc. having map information, etc. recorded therein form a navigation system. Location information indicating the current location of the vehicle 2 is displayed together with the map information on the display unit 19 by the navigation system.

The micro-computer 31 is provided to control the operations of the amplifier 32, the wireless unit 33, the display unit 19, the playback unit, etc. Upon reception of detection signals from the motion sensor 12 and the window break sensors 13, the micro-computer 31 performs control processing in accordance with the detection signals. At the same time, location information indicating the current location of the vehicle 2 and obtained from the GPS receiver 22 is stored in a not-shown built-in memory provided in the micro-computer 31. The location information is output as occasion demands.

As described above, the micro-computer 31 has a built-in memory. An owner's specific authentication code for identifying the vehicle 2's owner (which is equivalent to a registrant of automobile inspection of the vehicle 2 as a general rule) is stored in the built-in memory in advance. For example, the authentication code is set and registered by a seller at the time of the purchase of the vehicle 2 equipped with the electronic device 11 or at the time of the provision of the device body 16 of the electronic device 11 in the vehicle 2. After set, the authentication code cannot be changed easily by the owner.

Upon reception of a signal indicating the authentication code from the wireless unit 33 which will be described later, the micro-computer 31 collates the authentication code with the authentication code stored in the built-in memory and controls the mobile communication terminal 15 and the wireless unit 33 on the basis of a result of the collation.

The amplifier 32 amplifies an audio signal such as music information supplied from the playback unit, etc. and supplies the amplified signal to the speaker 18. The amplifier 32 also generates sound data such alarm sound on the basis of control of the micro-computer 31 and supplies the sound data to the speaker 18. That is, upon reception of a detection signal from any one of the motion sensor 12 and the window break sensors 13, the micro-computer 31 controls the amplifier 32 to generate sound data and supply the sound data to the speaker 18.

The wireless unit 33 is provided as a short-distance wireless transceiver such as a Bluetooth (trademark) transceiver for transmitting an electric signal by short-distance wireless communication. For example, the Bluetooth transceiver contains an LSI (Large Scale Integration) as a main body and has a short-distance wireless communication function based on Bluetooth which is a short-distance wireless communication technological standard. The Bluetooth transceiver performs short-distance wireless data communication with another Bluetooth transceiver. Specifically, a slave/master mode is used as a communication mode based on Bluetooth. Apparatuses used in the Bluetooth communication mode are classified into master apparatuses for deciding a frequency hopping pattern in accordance with the content of processing and slave apparatuses as partner apparatuses controlled by the master apparatuses. When such a master apparatus recognizes a slave apparatus in a circle with the radius of about 10 m, the exclusive ID numbers possessed by the apparatuses are exchanged for each other and confirmed. Then, there is carried out an authentication process in which random numbers are generated to thereby produce a link key (encrypted key) between the master apparatus and the slave apparatus. By the authentication process, connection between the master apparatus and the slave apparatus, that is, a transmission path of electric signals by short-distance wireless communication is established to enable data communication. On this occasion, the wireless unit 33 is equivalent to a master apparatus whereas the authentication transceiver 14 which will be described later is equivalent to a slave apparatus. After communication with the authentication transceiver 14 is established, the wireless unit 33 receives a signal indicating the authentication code from the authentication transceiver 14 and transmits the signal to the micro-computer 31.

On the other hand, the detachable grill panel 17 is detachably attached to the device body 16 having a front surface which can be opened and closed. Various kinds of switches not shown are disposed in the front surface of the detachable grill panel 17. When the passenger makes an input operation through these switches, the operation of the device body 16 is set and input. A lock unit not shown is provided on the rear surface side of the detachable grill panel 17. The lock unit is detachably engaged to a not-shown engagement unit provided in the front surface of the device body 16, so that the detachable grill panel 17 is attached to a predetermined position of the front surface of the device body 16.

A connector not shown is further provided on the rear surface side of the detachable grill panel 17. The connector has: a not-shown connection terminal connected to a not-shown I/O (Input/Output) port provided in the front surface of the device body 16 for transmitting/receiving various kinds of signals; a not-shown terminal having a detachment sensor for obtaining a sense of detachment, that is, for detecting attachment/detachment of the detachable grill panel 17 to/from the device body 16; and a not-shown power supply terminal provided for supplying electric power from the device body 16 to the detachable grill panel 17.

When the detachable grill panel 17 is attached to the device body 16 through the lock unit so that the detachable grill panel 17 is electrically connected to the device body 16 through connection by the power supply terminal, the micro-computer 31 recognizes the connection state of the detachable grill panel 17 on the basis of detection by the detachment sensor. The micro-computer 31 further recognizes the content of the operation of setting various kinds of switches through the I/O port on the basis of connection by the connection terminal. Incidentally, the detachable grill panel 17 is formed to have one-to-one correspondence with the device body 16. That is, even if the detachable grill panel 17 can be attached to a different device body 16, the micro-computer 31 of the different device body 16 makes a decision that a predetermined corresponding detachable grill panel 17 is not attached.

The speaker 18 outputs, as sound, an amplified audio signal or sound data such as alarm sound supplied from the amplifier 32. The display unit 19 displays information such as map information on the basis of control of the micro-computer 31.

The motion sensor 12 is configured in the same manner as in the related art and detects suspicious (abnormal) motion of the vehicle 2. That is, the motion sensor 12 is provided, for example, in a suspension of the vehicle 2, and manages, as data, the level of vibration suffered by the vehicle 2 at a standstill with the passenger's operation of getting on/off the vehicle 2. When the motion sensor 12 detects that the vehicle 2 suffers vibration exceeding the level, such as vibration generated in the case where the front or rear portion of the vehicle 2 at a standstill is lifted up by a tractor or the like, the motion sensor 12 outputs a detection signal of the suspicious motion to the micro-computer 31.

The window break sensors 13 are configured in the same manner as in the related art and detect that a door window pane, a front glass pane, a rear glass pane, and so on, not shown but provided in the vehicle 2 are broken. That is, the window break sensors 13 are embedded, for example, in the door window pane, the front glass pane, the rear glass pane, and so on, respectively. The window break sensors 13 detect that those panes suffer excessive external impact. Then, the window break sensors 13 make decisions that those panes are broken and output detection signals to the micro-computer 31.

For example, the authentication transceiver 14 is provided as a Bluetooth transceiver. That is, the authentication transceiver 14 transmits data to the wireless unit 33 and receives data from the wireless unit 33. Like the micro-computer 31, the authentication transceiver 14 has a built-in memory not shown. The authentication code of the owner (which is equivalent to a registrant of automobile inspection of the vehicle 2 as a general rule) of the vehicle 2 is stored in the built-in memory in advance.

The authentication transceiver 14 and the electronic device 11 make a set. When an authentication code is set and registered in the built-in memory of the micro-computer 31, the same authentication code having the same code format is also stored in the built-in memory of the authentication transceiver 14. When communication with the wireless unit 33 is established, the authentication transceiver 14 transmits data indicating the authentication code to the wireless unit 33.

Incidentally, in this embodiment, the authentication transceiver 14 is attached to a vehicle key 30 which is used for starting the engine of the vehicle 2 and turning on/off the Acc switch 28. That is, because the authentication transceiver 14 is attached to the vehicle key 30 necessary for use of the vehicle 2, the authentication transceiver 14 is necessarily carried when the vehicle 2 is used. As a result, both transmission of data to the wireless unit 33 and reception of data from the wireless unit 33 can be performed surely.

The mobile communication terminal 15 is a wireless communication medium such as a cellular phone connected to the electronic device 11. For example, the mobile communication terminal 15 is connected to a not-shown holder, a not-shown connection terminal or the like provided in the electronic device 11. The mobile communication terminal 15 transmits location information indicating the current location of the vehicle 2 or information indicating the abnormality of the vehicle 2 to the external base station 8 on the basis of control of the micro-computer 31.

Incidentally, data concerning the destination (base station 8) of transmission of the location information or the information indicating abnormality are provided in advance. When an abnormality occurs in the vehicle 2, the micro-computer 31 controls the transmission of data from the mobile communication terminal 15 on the basis of the data. The mobile communication terminal 15 further supports Bluetooth so that data can be transmitted to and received from the wireless unit 33. Hence, even in the condition that the mobile communication terminal 15 is not connected to the electronic device 11, the mobile communication terminal 15 can transmit data to and receive data from the wireless unit 33 if the mobile communication terminal 15 is in a range allowing transmission and reception. Hence, the mobile communication terminal 15 can transmit information indicating occurrence of an abnormality to the base station 8.

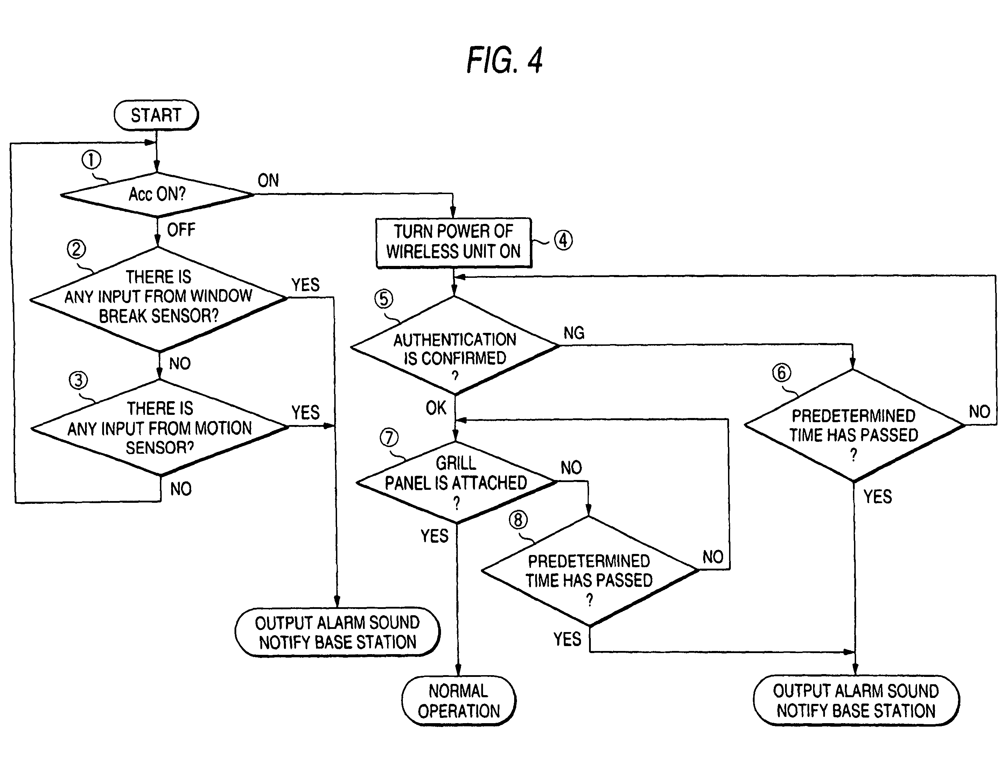

The action of the antitheft system 1 will be described below with reference to Fig. 4 which is a flow chart.

First, in step 1, the micro-computer 31 judges whether the Acc switch 28 is turned on by operation of the vehicle key 30 or not. When making a decision that the Acc switch 28 is not turned on, the micro-computer 31 recognizes that the vehicle 2 is not running, that is, the vehicle 2 is at a standstill. Incidentally, because the backup switch 29 in this state is on, the micro-computer 31 is supplied with electric power from the backup (BackUP) power supply 26 to thereby perform a control process.

Then, in step 2, the micro-computer 31 judges whether a detection signal indicating breaking of a front glass pane or the like is received from any one of the window break sensors 13 or not. When the micro-computer 31 makes a decision that a detection signal is not received from any one of the window break sensors 13, the process of the routine goes to step 3. In the step 3, the micro-computer 31 judges whether a detection signal indicating vibration exceeding a predetermined level is received from the motion sensor 12 or not. When the micro-computer 31 makes a decision that a detection signal is not received from the motion sensor 12, the process of the routine goes back to the step 1 to continue monitoring again as to whether the Acc switch 28 is turned on or not.

When making a decision in the step 2 that a detection signal is received from any one of the window break sensors 13 or when making a decision in the step 3 that a detection signal is received from the motion sensor 12, the micro-computer 31 controls the amplifier 32 to generate sound data such as alarm sound. Then, the speaker 18 outputs alarm sound or the like.

When the mobile communication terminal 15 is connected to the electronic device 11, the micro-computer 31 controls the mobile communication terminal 15 to transmit information indicating occurrence of an abnormality and location information indicating the current location of the vehicle 2 to the base station 8. On the contrary, when the mobile communication terminal 15 is not connected to the electronic device 11, the micro-computer 31 controls the wireless unit 33 to transmit information indicating occurrence of an abnormality to the mobile communication terminal 15 to thereby notify the owner of the vehicle 2 of the information. For example, the information indicating occurrence of an abnormality is displayed as character information on a display portion provided in the movable communication terminal 15 to thereby notify the owner of the information.

The base station 8 transmits the information indicating occurrence of an abnormality and the location information indicating the current location of the vehicle 2, received from the antitheft apparatus 5, to the external server 9 of the surveillance center through the network 7. Then, the surveillance center specifies the location of the vehicle 2 and notifies the security center such as a police office or a security company of the specified location through the network 7.

On the other hand, when making a decision in the step 1 that the Acc switch 28 is turned on, the micro-computer 31 recognizes that there is any passenger in the vehicle 2. Then, in step 4, the micro-computer 31 recognizes that the device body 16 is made operative by electric power supplied from the Acc power supply 25, that is, the wireless unit 33 is in a standby state for transmission/reception (step 4).

Incidentally, in this state, the backup switch 29 is off and only the Acc switch 28 is on, so that the micro-computer 31 executes the control process by electric power supplied from the Acc power supply 25. Because electric power is supplied from the Acc power supply 25, the display unit 19, the playback unit, etc. are activated to become operative. Electric power is also enabled to be supplied to the detachable grill panel 17, so that the electronic device 11 is activated as a whole.

Then, the micro-computer 31 judges whether a signal indicating an authentication code is received from the wireless unit 33 or not. That is, the micro-computer 31 judges whether or not the wireless unit 33 receives a signal indicating an authentication code from the authentication transceiver 14 after the transmission and reception condition between the wireless unit 33 and the authentication transceiver 14 is established. When making a decision that the signal is not received, the micro-computer 31 retries monitoring as to whether the signal is received.

Incidentally, when, for example, the micro-computer 31 makes a decision that the authentication code is still not received yet though the engine of the vehicle 2 is started, the micro-computer 31 judges that there is a possibility that the vehicle 2 may be driven illegitimately by an invader other than the owner of the vehicle 2, for example, there is a possibility that the vehicle 2 may be stolen by an invader illegally producing a replica of the vehicle key 30. Then, the micro-computer 31 controls the amplifier 32 to output alarm sound or the like from the speaker 18. At the same time, the micro-computer 31 controls the mobile communication terminal 15 to transmit information indicating occurrence of an abnormality and location information indicating the current location of the vehicle 2 to the base station 8, as described above.

When making a decision that the authentication code is received, the micro-computer 31 then collates the received authentication code with the authentication code stored in the built-in memory to thereby judge whether they coincide with each other or not (step 5). When making a decision that they coincide with each other, the micro-computer 31 judges that the vehicle 2 is used by the legitimate owner. In this case, the micro-computer 31 does not control the amplifier 32, the mobile communication terminal 15 and the wireless unit 33 but control the display unit 19, the playback unit, etc. to carry out the normal operation.

On the contrary, when making a decision that the received authentication code does not coincide with the stored authentication code, the micro-computer 31 waits for a predetermined time (step 6). When making a decision that the two authentication codes do not coincide with each other yet even after the predetermined time has passed, that is, a legitimate authentication code is not received, the micro-computer 31 judges that there is a possibility that the vehicle 2 may be driven illegitimately by an invader other than the owner of the vehicle 2, for example, there is a possibility that the vehicle 2 may be driven illegitimately by an invader illegally producing a replica of the vehicle key 30, as described above. Then, the micro-computer 31 controls the amplifier 32 to output alarm sound or the like from the speaker 18. At the same time, the micro-computer 31 controls the mobile communication terminal 15 to transmit information indicating occurrence of an abnormality and location information indicating the current location of the vehicle 2 to the base station 8.

Incidentally, even if the vehicle 2 is driven illegitimately by an invader, the micro-computer 31 always acquires the latest location information by the GPS receiver 22 and transmits it to the base station 8 through the mobile communication terminal 15. Accordingly, the surveillance center can manage the current location of the vehicle 2 in real time by the external server 9, so that the surveillance center can cope with theft rapidly by notifying the security center of the current location of the vehicle 2 consecutively.

When a normal operation is to be carried out in the case where the micro-computer 31 makes a decision in the step 5 that the two authentication codes coincide with each other, the micro-computer 31 judges whether the detachable grill panel 17 is attached or not (step 7). When making a decision that the detachable grill panel 17 is attached, the micro-computer 31 makes the normal operation carried out.

On the contrary, when making a decision in the step 7 that the detachable grill panel 17 is not attached, the micro-computer 31 waits for a predetermined time (step 8). When making a decision that the detachable grill panel 17 is not attached yet even after the predetermined time has passed, the micro-computer 31 judges that there is a possibility that the vehicle 2 may be driven illegitimately by an invader other than the owner of the vehicle 2, as described above. In this case, the micro-computer 31 controls the amplifier 32 to output alarm sound or the like from the speaker 18. At the same time, the micro-computer 31 controls the mobile communication terminal 15 to transmit information indicating occurrence of an abnormality and location information indicating the current location of the vehicle 2 to the base station 8.

This embodiment has the following operation and effect.

That is, the micro-computer 31 of the device body 16 of the electronic device 11 mounted in the vehicle 2 and supplied with electric power from the accessory power supply 25 and the backup power supply 26 performs controlling to output information indicating occurrence of an abnormality when a signal of an authentication code specific to the owner of the vehicle 2 and stored in the authentication transceiver 14 cannot be recognized. For this reason, occurrence of an abnormality such as theft of the vehicle 2 or theft of goods in the vehicle 2 can be surely prevented without use of the configuration specific to the vehicle 2, such as door unlock sensors, door open/shut sensors, etc. The structure of the antitheft apparatus can be simplified easily. Because the configuration need not be changed in accordance with the vehicle 2, versatility can be improved. Moreover, reduction in size, reduction in cost, improvement in productivity and improvement in setting workability can be achieved easily.

Moreover, the micro-computer 31 recognizes occurrence of an abnormality to thereby perform controlling to output alarm sound or the like from the speaker. With the configuration, the occurrence of an abnormality can be notified to the surroundings of the vehicle 2 in its early stage by use of the speaker outputting an audio signal obtained from the playback unit, etc. constituting the electronic device 11. Theft of the vehicle 2 or theft of good in the vehicle 2 can be prevented without provision of any special configuration for notifying the surroundings of the vehicle 2 of the occurrence of an abnormality.

Moreover, there is provided a navigation system which assists the movement of the vehicle 2 by acquiring location information of the vehicle 2 and supplying the location information as information concerning the movement of the vehicle 2 to the electronic device 11 to thereby output an image, a voice, etc. Current location information acquired by the navigation system is output, that is, notified of, together with a signal indicating occurrence of an abnormality. Accordingly, the location of the vehicle 2 can be notified of, together with the signal indicating occurrence of an abnormality by use of the navigation system assisting the movement of the vehicle 2. Hence, the location of the stolen vehicle 2 can be recognized as well as the vehicle 2 can be prevented from being stolen, so that prevention of occurrence of an abnormality and solution of the abnormality can be made easily.

Moreover, on the basis of the control of the micro-computer 31 recognizing the occurrence of an abnormality, the wireless unit 33 is made to output and notify of information indicating occurrence of an abnormality. Accordingly, the owner far from the vehicle 2 can be notified of the occurrence of an abnormality. At the same time, the surveillance center and the security center can be rapidly notified of the occurrence of an abnormality. Hence, measures against the abnormality can be taken rapidly and convenience can be also improved. In addition, the vehicle 2 can be monitored remotely, so that prevention of occurrence of an abnormality such as theft and solution of the abnormality can be made efficiently.

Moreover, the micro-computer 31 recognizes the authentication code and recognizes the state of attachment of a corresponding detachable grill panel 17 for setting and inputting the operation of the device body 16 of the electronic device 11. If both are not recognized, the micro-computer 31 judges that the vehicle 2 is abnormal. Hence, even today's skillful theft can be surely prevented by the configuration using multiple recognition of the user. The user can be recognized surely without malfunction.

Moreover, the authentication transceiver 14 for transmitting an authentication code is provided so that the authentication code is received by the wireless unit 33 in the device body 16 of the electronic device 11. Hence, neither key nor operation of inputting the authentication code is required. For example, the wireless unit 33 is supplied electric power from the backup power supply 26 and the collation of the authentication code can be performed even at a location far from the vehicle 2. Easy handling and improvement in convenience can be achieved.

Judgment of abnormality on the basis of movement of the vehicle 2, impact on the vehicle 2, etc., distinction of authentication and notification of occurrence of abnormality are controlled by the micro-computer 31 provided for controlling switching of sources and various kinds of operations of the device body 16 of the electronic device 11. No special configuration but the electronic device 11 mounted in the vehicle 2 is required, so that measures against theft can be taken easily.

Moreover, configuration is made so that the security network 6 is notified of occurrence of an abnormality. Hence, appropriate measures against the abnormality, such as measures to notify the security center of occurrence of the abnormality, can be taken rapidly as well as the occurrence of the abnormality can be recognized early. Hence, convenience can be improved. Moreover, since a plurality of vehicles 2 can be collectively monitored by the surveillance center, efficient, sure and appropriate monitoring can be made.

Since the security network 6 is notified of the occurrence of the abnormality through a wireless communication medium, measures against the abnormality can be taken efficiently and rapidly, and convenience can be improved. In addition, since the abnormality can be monitored remotely in real time, efficient, sure and appropriate monitoring can be made.

The location information acquired by the navigation system is notified of as well as the occurrence of the abnormality is notified to the security network 6. Measures against the abnormality can be taken efficiently, rapidly and surely.

## Claims

1. An antitheft apparatus comprising
a device (16, 17) attached to a movable body (2), operated by electric power supplied from the movable body (2), and storing an owner's specific authentication code;
an authentication code storage and transmission unit (14) capable of storing an authentication code equivalent to the owner's specific authentication code and capable of transmitting a signal of the authentication code to the device (16, 17);
an authentication code reception unit (33) capable of receiving the signal of the authentication code transmitted from the authentication code storage and transmission unit (14) when the device (16, 17) is operative; and
a control unit (31) for making a decision that a legitimate owner of the movable body (2) is using the movable body (2) when the authentication code received by the authentication code reception unit (33) coincides with the owner's specific authentication code stored in the device (16, 17);
the apparatus further comprising an abnormality occurrence output unit (18, 32, 33) for outputting information indicating occurrence of an abnormality,
wherein the control unit (31) controls the abnormality occurrence output unit (18, 32, 33) to output the information when the control unit (31) makes either a decision that the signal of the authentication code transmitted from the authentication code storage and transmission unit (14) is not received by the authentication code reception unit (33) in a condition that the device (16, 17) is operative or a decision that the authentication code recevied by the authentication code reception unit (33) does not coincide with the owner's specific authentication code stored in the device (16, 17) and **characterised in that:**
the abnormality occurrence output unit (33) outputs the information indicating occurrence of an abnormality by transmitting the information to an external portion through a wireless transmission medium;
the device (16, 17) has a function for acquinng location information indicating a current location of the movable body (2); and
the abnormality occurrence output unit (33) transmits the location information in addition to the information indicating occurrence of an abnormality

2. The antitheft apparatus according to claim 1, wherein the device (16, 17) includes:
a device body (16) operated by electric power supplied from the movable body (2); and
an operate unit (17) which can be attached to the device body (16) and detached from the device body (16); and
the control unit (31) makes a decision that the legitimate owner of the movable body (2) is using the movable body (2) when the authentication code received by the authentication code reception unit (33) coincides with the owner's specific authentication code stored in the device (16, 17) and the operation unit (17) is attached to the device body (16).

3. The antitheft apparatus according to claim 2, wherein the control unit (31) controls the abnormality occurrence output unit (18, 32, 33) to output the information when the control unit (31) makes a decision that the operation unit (17) is not attached to the device body (16).

4. The antitheft apparatus according to claim 1, wherein the abnormality occurrence output unit (18, 32) outputs the information indicating occurrence of an abnormality as sound.

5. An antitheft method comprising the steps of:
detecting that a device (16, 17) attached to a movable body (2) is operated by electric power supplied from the movable body (2);
enabling reception of an authentication code transmitted from an external portion in a condition that the device (16, 17) is operative; and
performing controlling to output information indicating occurrence of an abnormality when the authentication code transmitted from the external portion is not received in the condition that the device (16, 17) is operative or when the received authentication code does not coincide with the owner's specific authentication code stored in the device (16, 17), and **characterised by**:
outputting the information indicating occurrence of an abnormality by transmitting the information to an external portion through a wireless transmission medium;
acquiring location information indicating a current location of the moveable body (2); and
transmitting the location information, in addition to the information indicating occurrence of an abnormality.

6. The antitheft method according to claim 5. wherein the device (16, 17) includes a device body (16) and an operation unit (17) which can be attached to the device body (16) and detected from the device body (16),
wherein the information indicating occurrence of an abnormality is output also when the operation unit (17) is not attached to the device body (16).

7. An antitheft program comprising instructions for a computer to perform an antitheft method comprising the steps of:
detecting that a device (16, 17) attached to a movable body (2) is operated by electric power supplied from the movable body (2);
enabling reception of an authentication code transmitted from an external portion in a condition that the device (16, 17) is operative; and
performing controlling to output information indicating occurrence of an abnormality when the authentication code transmitted from the external portion is not received in the condition that the device (16, 17) is operative or when the received authentication code does not coincide with an owner's specific authentication code stored in the device (16, 17) and **characterised by**:
outputting the information indicating occurrence of an abnormality by transmitting the information to an external portion through a wireless transmission medium;
acquiring location information indicating a current location of the moveable body (2); and
transmitting the location information in addition to the information indicating occurrence of an abnormality.

8. An antitheft program according to claim 7, wherein the device (16, 17) includes a device body (16) and an operate unit (17) which can be attached to the device body (16) and detected from the device body (16),
wherein the information indicating occurrence of an abnormality is output also when the operation unit (17) is not attached to the device body (16).

## Patentansprüche

1. Diebstahlsicherungsvorrichtung, die umfasst:
eine Einrichtung (16, 17), die an einem beweglichen Körper (2) angebracht wird, durch elektrischen Strom betätigt wird, der von dem beweglichen Körper (2) zugeführt wird, und einen spezifischen Eigentümer-Authentifizierungscode speichert;
eine Authentifizierungscode-Speicher-und-Sende-Einheit (14), die in der Lage ist, einen Authentifizierungscode zu speichern, der äquivalent zu dem spezifischen Besitzer-Authentifizierungscode ist, und in der Lage ist, ein Signal des Authentifizierungscodes zu der Einrichtung (16, 17) zu senden;
eine Authentifizierungscode-Empfangseinheit (33), die in der Lage ist, das Signal des von der Authentifizierungscode-Speicher-und-Sende-Einheit (14) gesendeten Authentifizierungscodes zu empfangen, wenn die Einrichtung (16, 17) in Funktion ist; und
eine Steuereinheit (31), die entscheidet, dass ein legitimer Besitzer des beweglichen Körpers (2) den beweglichen Körper (2) benutzt, wenn der durch die Authentifizierungscode-Empfangseinheit (33) empfangene Authentifizierungscode mit dem spezifischen Besitzer-Authentifizierungscode übereinstimmt, der in der Einrichtung (16, 17) gespeichert ist;
die Vorrichtung des Weiteren eine Einheit (18, 32, 33) zum Ausgeben von Auftreten einer Abnormität umfasst, die Informationen ausgibt, die Auftreten einer Abnormität anzeigen,
wobei die Steuereinheit (31) die Einheit (18, 32, 33) zum Ausgeben von Auftreten einer Abnormität so steuert, dass sie die Informationen ausgibt, wenn die Steuereinheit (31) entweder entscheidet, dass das von der Authentifizierungscode-Speicher-und-Sende-Einheit (14) gesendete Signal des Authentifizierungscodes durch die Authentifizierungscode-Empfangseinheit (33) in einem Zustand nicht empfangen wird, in dem die Einrichtung (16, 17) in Funktion ist, oder entscheidet, dass der durch die Authentifizierungscode-Empfangseinheit (33) empfangene Authentifizierungscode nicht mit dem spezifischen Besitzer-Authentifizierungscode übereinstimmt, der in der Einrichtung (16, 17) gespeichert ist, und **dadurch gekennzeichnet, dass**:
die Einheit (33) zum Ausgeben von Auftreten einer Abnormität die Informationen ausgibt, die Auftreten einer Abnormität anzeigen, indem die Informationen über ein Drahtlos-Sendemedium zu einem externen Abschnitt gesendet werden;
die Einrichtung (16, 17) eine Funktion zum Erfassen von Standortinformationen hat, die einen aktuellen Standort des beweglichen Körpers (2) anzeigen; und
die Einheit (33) zum Ausgeben von Auftreten einer Abnormität die Standortinformationen zusätzlich zu den Informationen sendet, die Auftreten einer Abnormität anzeigen.

2. Diebstahlsicherungsvorrichtung nach Anspruch 1, wobei die Einrichtung (16, 17) enthält:
einen Einrichtungskörper (16), der durch elektrischen Strom betätigt wird, der von dem beweglichen Körper (2) zugeführt wird; und
eine Betätigungseinheit (17), die an dem Einrichtungskörper (16) angebracht und von dem Einrichtungskörper (16) entfernt werden kann; und
wobei die Steuereinheit (31) entscheidet, dass der legitime Besitzer des beweglichen Körpers (2) den beweglichen Körper (2) benutzt, wenn der durch die Authentifizierungscode-Empfangseinheit (33) empfangene Authentifizierungscode mit dem spezifischen Besitzer-Authentifizierungscode übereinstimmt, der in der Einrichtung (16, 17) gespeichert ist, und die Betätigungseinheit (17) an dem Einrichtungskörper (16) angebracht ist.

3. Diebstahlsicherungsvorrichtung nach Anspruch 2, wobei die Steuereinheit (31) die Einheit (18, 32, 33) zum Ausgeben von Auftreten einer Abnormität so steuert, dass sie die Informationen ausgibt, wenn die Steuereinheit (31) entscheidet, dass die Betätigungseinheit (17) nicht an dem Einrichtungskörper (16) angebracht ist.

4. Diebstahlsicherungsvorrichtung nach Anspruch 1, wobei die Einheit (18, 32) zum Ausgeben von Auftreten einer Abnormität die Informationen, die Auftreten einer Abnormität anzeigen, als Ton ausgibt.

5. Diebstahlsicherungsverfahren, das die folgenden Schritte umfasst:
Erfassen, dass eine Einrichtung (16, 17), die an einem beweglichen Körper (2) angebracht ist, durch elektrischen Strom betätigt wird, der von dem beweglichen Körper (2) zugeführt wird;
Ermöglichen von Empfang eines Authentifizierungscodes, der von einem externen Abschnitt gesendet wird, in einem Zustand, in dem die Einrichtung (16, 17) in Funktion ist; und
Durchführen von Steuerung zum Ausgeben von Informationen, die Auftreten einer Abnormität anzeigen, wenn der von dem externen Abschnitt gesendete Authentifizierungscode in dem Zustand nicht empfangen wird, in dem die Einrichtung in Funktion ist, oder wenn der empfangene Authentifizierungscode nicht mit dem spezifischen Besitzer- Authentifizierungscode übereinstimmt, der in der Einrichtung (16, 17) gespeichert ist, und **gekennzeichnet durch**:
Ausgeben der Informationen, die Auftreten einer Abnormität anzeigen, **durch** Senden der Informationen zu einem externen Abschnitt über ein Drahtlos-Sendemedium;
Erfassen von Informationen, die einen aktuellen Standort des beweglichen Körpers (2) anzeigen; und
Senden der Standortinformationen zusätzlich zu den Informationen, die Auftreten einer Abnormität anzeigen.

6. Diebstahlsicherungsverfahren nach Anspruch 5, wobei die Einrichtung (16, 17) einen Einrichtungskörper (16) und eine Betätigungseinheit (17) enthält, die an dem Einrichtungskörper (16) angebracht und von dem Einrichtungskörper (16) entfernt werden kann,
wobei die Informationen, die Auftreten einer Abnormität anzeigen, auch ausgegeben wird, wenn die Betätigungseinheit (17) nicht an dem Einrichtungskörper (16) angebracht ist.

7. Diebstahlsicherungsprogramm, das Befehle für einen Computer zum Durchführen eines Diebstahlsicherungsverfahrens umfasst, das die folgenden Schritte umfasst:
Erfassen, dass eine Einrichtung (16, 17), die an einem beweglichen Körper (2) angebracht ist, durch elektrischen Strom betätigt wird, der von dem beweglichen Körper (2) zugeführt wird;
Ermöglichen von Empfang eines Authentifizierungscodes, der von einem externen Abschnitt gesendet wird, in einem Zustand, in dem die Einrichtung (16, 17) in Funktion ist; und
Durchführen von Steuerung, um Informationen auszugeben, die Auftreten einer Abnormität anzeigen, wenn der von dem externen Abschnitt gesendete Authentifizierungscode in dem Zustand nicht empfangen wird, in dem die Einrichtung (16, 17) in Funktion ist, oder wenn der empfangene Authentifizierungscode nicht mit dem spezifischen Besitzer-Authentifizierungscode übereinstimmt, der in der Einrichtung (16, 17) gespeichert ist, und **gekennzeichnet durch**:
Ausgeben der Informationen, die Auftreten einer Abnormität anzeigen, **durch** Senden der Informationen zu einem externen Abschnitt über ein Drahtlos-Sendemedium;
Erfassen von Standortinformationen, die einen aktuellen Standort des beweglichen Körpers (2) anzeigen; und
Senden der Standortinformationen zusätzlich zu den Informationen, die Auftreten einer Abnormität anzeigen.

8. Diebstahlsicherungsprogramm nach Anspruch 7, wobei die Einrichtung (16, 17) einen Einrichtungskörper (16) und eine Betätigungseinheit (17) enthält, die an dem Einrichtungskörper (16) angebracht und von dem Einrichtungskörper (16) entfernt werden kann,
wobei die Informationen, die Auftreten einer Abnormität anzeigen, auch ausgegeben werden, wenn die Betätigungseinheit (17) nicht an dem Einrichtungskörper (16) angebracht ist.

## Revendications

1. Dispositif antivol comprenant :
un dispositif (16, 17) fixé à un corps mobile (2), actionné par une énergie électrique fournie depuis le corps mobile (2), et stockant un code d'authentification spécifique du propriétaire ;
une unité de stockage et de transmission de code d'authentification (14) capable de stocker un code d'authentification équivalent au code d'authentification spécifique du propriétaire et capable de transmettre un signal du code d'authentification au dispositif (16, 17) ;
une unité de réception de code d'authentification (33) capable de recevoir le signal du code d'authentification transmis depuis l'unité de stockage et de transmission de code d'authentification (14) lorsque le dispositif (16, 17) est opérationnel ; et
une unité de commande (31) destiné à prendre une décision qu'un propriétaire légitime du corps mobile (2) utilise le corps mobile (2) lorsque le code d'authentification reçu par l'unité de réception de code d'authentification (33) coïncide avec le code d'authentification spécifique du propriétaire stocké dans le dispositif (16, 17) ;
le dispositif comprenant en outre une unité de sortie d'occurrence d'anomalie (18, 32, 33) destinée à émettre des informations indiquant l'occurrence d'une anomalie,
dans lequel l'unité de commande (31) commande l'unité de sortie d'occurrence d'anomalie (18, 32, 33) pour émettre les informations lorsque l'unité de commande (31) prend une décision que le signal du code d'authentification transmis depuis l'unité de stockage et de transmission de code d'authentification (14) n'est pas reçu par l'unité de réception de code d'authentification (33) dans une condition où le dispositif (16, 17) est opérationnel ou une décision que le code d'authentification reçu par l'unité de réception de code d'authentification (33) ne coïncide pas avec le code d'authentification spécifique du propriétaire stocké dans le dispositif (16, 17) et **caractérisé en ce que** :
l'unité de sortie d'occurrence d'anomalie (33) émet les informations indiquant l'occurrence d'une anomalie en transmettant les informations vers une partie externe à travers un moyen de transmission sans fil ;
le dispositif (16, 17) comprend une fonction pour acquérir des informations d'emplacement indiquant un emplacement actuel du corps mobile (2) ; et
l'unité de sortie d'occurrence d'anomalie (33) transmet les informations d'emplacement en plus des informations indiquant l'occurrence d'une anomalie.

2. Dispositif antivol selon la revendication 1, dans lequel le dispositif (16, 17) comprend :
un corps de dispositif (16) actionné par une énergie électrique fournie depuis le corps mobile (2) ; et
une unité d'actionnement (17) qui peut être fixée au corps de dispositif (16) et détachée du corps de dispositif (16) ; et
l'unité de commande (31) prend une décision que le propriétaire légitime du corps mobile (2) utilise le corps mobile (2) lorsque le code d'authentification reçu par l'unité de réception de code d'authentification (33) coïncide avec le code d'authentification spécifique du propriétaire stocké dans le dispositif (16, 17) et l'unité d'actionnement (17) est fixée au corps de dispositif (16).

3. Dispositif antivol selon la revendication 2, dans lequel l'unité de commande (31) commande l'unité de sortie d'occurrence d'anomalie (18, 32, 33) pour émettre les informations lorsque l'unité de commande (31) prend une décision que l'unité d'actionnement (17) n'est pas fixée au corps de dispositif (16).

4. Dispositif antivol selon la revendication 1, dans lequel l'unité de sortie d'occurrence d'anomalie (18, 32) émet les informations indiquant l'occurrence d'une anomalie comme un son.

5. Procédé antivol comprenant les étapes consistant à :
détecter qu'un dispositif (16, 17) fixé à un corps mobile (2) est actionné par une énergie électrique fournie depuis le corps mobile (2) ;
activer la réception d'un code d'authentification transmis depuis une partie externe dans une condition où le dispositif (16, 17) est opérationnel ; et
réaliser une commande pour émettre des informations indiquant l'occurrence d'une anomalie lorsque le code d'authentification transmis depuis la partie externe n'est pas reçu dans la condition où le dispositif (16, 17) est opérationnel ou lorsque le code d'authentification ne coïncide pas avec le code d'authentification spécifique du propriétaire stocké dans le dispositif (16, 17) ; et **caractérisé par** les étapes consistant à :
émettre les informations indiquant l'occurrence d'une anomalie en transmettant les informations vers une partie externe à travers un moyen de transmission sans fil ;
acquérir des informations d'emplacement indiquant un emplacement actuel du corps mobile (2) ; et
transmettre les informations d'emplacement en plus des informations indiquant l'occurrence d'une anomalie.

6. Procédé antivol selon la revendication 5, dans lequel le dispositif (16, 17) comprend un corps de dispositif (16) et une unité d'actionnement (17) qui peut être fixée au corps de dispositif (16) et détectée depuis le corps de dispositif (16) ;
dans lequel les informations indiquant l'occurrence d'une anomalie sont émises également lorsque l'unité d'actionnement (17) n'est pas fixée au corps de dispositif (16).

7. Programme antivol comprenant des instructions pour un ordinateur pour réaliser un procédé antivol comprenant les étapes consistant à :
détecter qu'un dispositif (16, 17) fixé à un corps mobile (2) est actionné par une énergie électrique fournie depuis le corps mobile (2) ;
activer la réception d'un code d'authentification transmis depuis une partie externe dans une condition où le dispositif (16, 17) est opérationnel ; et
réaliser une commande pour émettre des informations indiquant l'occurrence d'une anomalie lorsque le code d'authentification transmis depuis la partie externe n'est pas reçue dans la condition où le dispositif (16, 17) est opérationnel ou lorsque le code d'authentification ne coïncide pas avec le code d'authentification spécifique du propriétaire stocké dans le dispositif (16, 17) ; et **caractérisé par** les étapes consistant à :
émettre les informations indiquant l'occurrence d'une anomalie en transmettant les informations vers une partie externe à travers un moyen de transmission sans fil ;
acquérir des informations d'emplacement indiquant un emplacement actuel du corps mobile (2) ; et
transmettre les informations d'emplacement en plus des informations indiquant l'occurrence d'une anomalie.

8. Programme antivol selon la revendication 7, dans lequel le dispositif (16, 17) comprend un corps de dispositif (16) et une unité d'actionnement (17) qui peut être fixée au corps de dispositif (16) et détectée depuis le corps de dispositif (16) ;
dans lequel les informations indiquant l'occurrence d'une anomalie sont émises également lorsque l'unité d'actionnement (17) n'est pas fixée au corps de dispositif (16).
